# EUROPÄISCHE PATENTSCHRIFT

(11) **EP 2 408 841 B1**
(45) Veröffentlichungstag und Bekanntmachung des Hinweises auf die Patenterteilung: **19.11.2014**
(21) Anmeldenummer: 10709821.2
(22) Anmeldetag: 11.03.2010
(51) Int. Cl.: C08G 18/63, C08G 18/79, C08G 18/12, C08G 18/40, C08G 18/48

(54) **POLYURETHANFORMKÖRPER MIT VERBESSERTER WEITERREIßFESTIGKEIT UND VERBESSERTEM DAUERBIEGEVERHALTEN**
POLYURETHANE MOLDED BODY HAVING IMPROVED TEAR PROPAGATION RESISTANCE AND IMPROVED BENDING FATIGUE BEHAVIOR
CORPS MOULÉ EN POLYURÉTHANNE PRÉSENTANT UNE RÉSISTANCE AMÉLIORÉE À LA PROPAGATION D'UNE DÉCHIRURE ET UN MEILLEUR COMPORTEMENT EN FATIGUE PAR FLEXION

(30) Priorität: 17.03.2009 EP 09155393
(43) Veröffentlichungstag der Anmeldung: 25.01.2012
(73) Patentinhaber: BASF SE, 67056 Ludwigshafen (DE)
(72) Erfinder: MOHMEYER, Nils, 49076 Osnabrück (DE); HABECK, Tobias, 01129 Dresden (DE); FREIDANK, Daniel, 49448 Lemförde (DE); LÖFFLER, Achim, 67346 Speyer (DE); ORTALDA, Marco, I-10137 Torino (IT); TEPE, Daniela, 49413 Dinklage (DE)
(86) Internationale Anmeldenummer: PCT/EP2010/053120
(87) Internationale Veröffentlichungsnummer: WO 2010/105966

(56) Entgegenhaltungen:
- WO-A1-97/20875
- DE-A1-102004 009 939
- US-A- 5 648 559
- US-B1- 6 329 441

## Beschreibung

Die Erfindung betrifft reaktive Polyurethansysteme mit geringer Entformungszeit zur Herstellung von Polyurethanformkörpern mit verbesserten mechanischen Eigenschaften, insbesondere verbesserter Weiterreißfestigkeit und verbessertem Dauerbiegeverhalten.

Polyurethane werden aufgrund ihres in weiten Bereichen variierbaren Eigenschaftsprofils in einer Vielzahl von Anwendungen eingesetzt. Polyurethane können dabei sowohl in kompakter als auch in geschäumter Form eingesetzt werden. Elastische Polyurethanformkörper mit kompakter Oberfläche und zelligem Kern, sogenannte Polyurethan-Weichintegralschaumstoffe, sind seit langem bekannt und werden in unterschiedlichen Bereichen eingesetzt. Eine typische Verwendung ist die als Schuhsohle, zum Beispiel für Straßenschuhe, Sportschuhe, Sandalen und Stiefel. Insbesondere können Polyurethan-Weichintegralschaumstoffe bei der Herstellung von Außensohlen, Zwischensohlen, Einlegesohlen und Formsohlen eingesetzt werden.

Polyesterole, welche zur Herstellung von Polyurethanen eingesetzt werden, weisen zum Teil ein schlechtes Hydrolysealterungsverhalten auf. Polyetherole werden im Allgemeinen durch KOH-katalysierte Polymerisation oder durch DMC-katalysierte Polymerisation hergestellt.

EP-A 1 170 314 beschreibt die Herstellung von Polyisocyanat-Polyadditionsprodukten durch Umsetzung von a) Isocyanat-Prepolymeren, b) Polyetherpolyolen, c) mindestens einem Kettenverlängerungsmittel, d) gegebenenfalls Treibmittel, und e) gegebenenfalls Katalysatoren, Hilfs- oder Zusatzstoffen. Die EP-A 1 170 314 beschreibt die Polyetherpolyole nur sehr unspezifisch. Die Polyetherpolyole werden durch anionische Polymerisation mit Alkalihydroxiden oder Alkalialkoholaten als Katalysatoren und aus einem 2-bis 3-funktionellen Startermolekül und vorzugsweise Ethylenoxid und 1,2-Propylenoxid erhalten. Dabei können die Alkylenoxide einzeln, alternierend nacheinander oder als Mischungen verwendet werden. Bevorzugt werden Mischungen aus 1,2-Propylenoxid und Ethylenoxid eingesetzt, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen. Als Startermoleküle werden genannt: Wasser oder 2- und 3-wertige Alkohole wie Ethylenglykol, Propandiol-1,2 und -1,3, Diethylenglykol, Dipropylenglykol, Butandiol-1,4, Glycerin, Trimethylolpropan usw. Die Polyetherpolyole besitzen eine Funktionalität von 2 bis 3 und Molekulargewichte von 1000 bis 8000, vorzugsweise 2000 bis 7000 g/mol.

In WO 97/44374 wird die Verwendung von mittels DMC-Katalyse hergestellten Polyetherpolyolen (nachfolgend auch als DMC-Polyetherpolyole bezeichnet) zur Herstellung von Polyurethan-Integralschaumstoffen mit Dichten von 200 bis 350 g/L beschrieben. Diese Polyurethan-Integralschaumstoffe können auch als Schuhsohlen verwendet werden. Der Nachteil dieser DMC-Polyetherpolyole ist, dass diese herstellungsbedingt nur sekundäre OH-Gruppen aufweisen und aufgrund der geringen Reaktivität ausschließlich bei der Herstellung von Prepolymeren Verwendung finden können. Polyurethanformkörper mit geringer Dichte und guten mechanischen Eigenschaften können so nur bedingt erhalten werden, da in der Polyol-Komponente weiterhin KOH-katalysierte Polyole verwendet werden. Diese enthalten herstellungsbedingt Monoole, die zu Kettenabbrüchen während der Polymerisation führen und so die mechanischen Eigenschaften des Polyurethansystems negativ beeinflussen.

WO 00/18817 erläutert die Herstellung von niederdichten Polyurethanformkörpern unter Verwendung von DMC-Polyetherpolyolen mit sogenanntem Ethylenoxid-Endcap, wodurch Polyole mit primären OH-Gruppen erhalten werden. Der Gehalt an primären OH-Gruppen beträgt mindestens 50%, vorzugsweise mindestens 65%. Diese Polyole können sowohl in der Polyolkomponente als auch im Prepolymeren eingesetzt werden. Der Nachteil dieser Polyole ist, dass DMC-Polyole mit einem EO-Endcap über einen aufwendigen *Hybridprozess* hergestellt werden. Das bedeutet, dass der Polypropylenglykol-Polyol-Kern über DMC-Katalyse hergestellt wird und mittels KOH-Katalyse ein EO-Endcap aufgebracht wird. Reine Polyethylenoxidblöcke lassen sich nicht reproduzierbar herstellen, da die DMC-katalysierte Polymerisation von reinem Ethylenoxid sehr unkontrolliert verläuft, so dass teilweise trübe (durch Auskristallisation von Polyethylenoxid-Polymeren) Polyole erhalten werden.

Es ist also bisher nicht möglich ist, DMC-Polyetherole herzustellen, die einen ausreichend hohen Anteil an primären OH-gruppen und damit eine ausreichend hohe Reaktivität aufweisen, um die geforderte geringe Entformzeit für Schuhsohlen zu gewährleisten.

Um die geforderten mechanischen Eigenschaften von Polyurethansystemen für Schuhanwendungen zu erreichen, sollte die mittlere OH-Funktionalität der eingesetzten Polyetherpolyole bei 2 liegen. Da aber durch KOH-Katalyse hergestellte Polyetherpolyole wegen der Bildung von Monoolen immer eine niedrigere mittlere OH-Funktionalität aufweisen als die eingesetzten Starterverbindungen, werden häufig Mischungen von Polyetherpolyolen auf Basis von Diolen mit mittleren OH-Funktionalitäten von < 2 und auf Basis von Triolen mit mittleren OH-Funktionalitäten von < 3 eingesetzt, so dass insgesamt eine mittlere OH-Funktionalität von 2 resultiert. Jedoch führt die Gegenwart von trifunktionellen Polyetherpolyolen in den Gemischen zu einer Verschlechterung der mechanischen Eigenschaften wie der Weiterreißfähigkeit und der Dauerbiegeeigenschaften der Polyurethane.

Daher ist es wünschenswert, rein lineare Polyetherpolyole mit einer OH-Funktionalität von 2, welche unter Erhalt der Funktionalität des Startermoleküls durch DMC-Katalyse erhältlich sind, in den Polyurethansystemen einzusetzen. Problematisch ist jedoch die Polymerisation von Ethylenoxid in Gegenwart von DMC-Katalysatoren, da aufgrund der hohen Reaktivität von Ethylenoxid an DMC-Katalysatoren die Kontrolle der Ethylenoxid-Polymerisation schwierig ist und häufig uneinheitliche Produkte erhalten werden. Ein ausreichender Gehalt an primären OH-Gruppen durch Anlagerung von Ethylenoxid an das Polyetherpolyol ist jedoch unerlässlich, damit die Polyetherpolyole eine ausreichend hohe Reaktivität (gekennzeichnet durch geringe Entformungszeiten) aufweisen.

Aufgabe der vorliegenden Erfindung ist, ein Polyurethansystem mit ausreichend hoher Reaktivität zur Herstellung von Polyurethanformkörpern bereitzustellen, das geringe Entformungszeiten aufweist und zu Polyurethanformkörpern mit verbesserten mechanischen Eigenschaften, insbesondere verbesserter Reißfestigkeit und verbesserten Dauerbiegeeigenschaften führt.

Die erfindungsgemäße Aufgabe wird gelöst durch ein Verfahren zur Herstellung eines Polyurethanformkörpers, bei dem man
(a) Polyisocyanate (a-1) oder Polyisocyanatprepolymere, erhältlich aus einer Polyisocyanatkomponente (a-1), gegebenenfalls Polyol (a-2), enthaltend Alkylenoxid, vorzugsweise Polypropylenoxid, und Kettenverlängerer (a-3), und Polyole (b) oder (c), bestehend aus
(b) Polyetherpolyolen erhältlich durch Anlagerung von Propylenoxid und Ethylenoxid an Alkylenglykole oder Polyalkylenglykole mit einem Ethylenoxid-Gehalt von 0,5 bis 60 Gew.-% und einem Gehalt an primären OH-Gruppen von 1 bis 45 %, oder
(c) Polymerpolyetherpolyolen auf Basis von Polyetherpolyolen erhältlich durch Anlagerung von Propylenoxid und Ethylenoxid an Alkylenglykole oder Polyalkylenglykole mit eine Ethylenoxid-Gehalt von 0,5 bis 60 Gew.-% und einem Gehalt an primären OH-Gruppen von 1 bis 45%, wobei mindestens eine der Komponenten b) oder c) enthalten ist, und
(d) Kettenverlängerer,
(e) Katalysatoren,
(f) gegebenenfalls Treibmittel, enthaltend Wasser, und gegebenenfalls
(g) sonstigen Hilfsmittel und/oder Zusatzstoffe
zu einer Reaktionsmischung vermischt und in einer Form zum Polyurethanformkörper aushärtet.

Weiter wird die erfindungsgemäße Aufgabe gelöst durch Polyurethanformkörper, herstellbar nach dem erfindungsgemäßen Verfahren.

Die zur Herstellung der Polyurethanschaumstoffe bevorzugt eingesetzten Polyisocyanatprepolymere (a) sind erhältlich aus einer Polyisocyanatkomponente (a-1), Polyol (a-2) enthaltend Alkylenoxid oder bevorzugt Propylenoxid, und Kettenverlängerer (a-3). Diese Polyisocyanatprepolymere (a) sind erhältlich, indem Polyisocyanate (a-1), beispielsweise bei Temperaturen von 30 bis 100 °C, bevorzugt bei etwa 80 °C, mit Polyolen (a-2) und Kettenverlängerer (a-3) zum Prepolymer umgesetzt werden. Das Verhältnis von Isocyanatgruppen zu isocyanatreaktiven Gruppen wird hierbei so gewählt, dass der NCO-Gehalt des Prepolymeren 8 bis 28 Gew.-%, vorzugsweise 14 bis 26 Gew.-%, besonders bevorzugt 16 bis 23 Gew.-% und insbesondere 16 bis 20 Gew.-% beträgt. Um Nebenreaktionen durch Luftsauerstoff auszuschließen, kann die Umsetzung unter Inertgas, vorzugsweise Stickstoff, durchgeführt werden.

Als Polyisocyanate (a-1) können die aus dem Stand der Technik bekannten aliphatischen, cycloaliphatischen und aromatischen zwei- oder mehrwertigen Isocyanate (sowie beliebige Mischungen daraus) eingesetzt werden. Beispiele sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Toluylendiisocyanat (TDI), Naphthalindiisocyanat (NDI), Isophorondiisocyanat (IPDI) und Mischungen daraus.

Bevorzugt wird 4,4'-MDI und/oder HDI verwendet. Das besonders bevorzugt verwendete 4,4'-MDI kann geringe Mengen, bis etwa 10 Gew.-%, allophanat-, carbodiimid- oder uretoniminmodifizierte Polyisocyanate enthalten. Es können auch geringe Mengen Polyphenylenpolymethylenpolyisocyanat (Roh-MDI) eingesetzt werden. Die Gesamtmenge von Isocyanatmolekülen mit einer Funktionalität von > 2 sollte 5 Gew.-% der Gesamtmasse des eingesetzten Isocyanats nicht überschreiten.

Als Polyol (a-2) werden vorzugsweise Polyole auf Etherbasis, enthaltend Polypropylenoxid, verwendet. Neben Polypropylenoxid können beispielsweise Polyole auf Basis von Polyethylenoxid und/oder Copolyole auf Basis von Polypropylenoxid und Polyethylenoxid eingesetzt werden. Die mittlere Funktionalität der eingesetzten Polyole (a-2) beträgt vorzugsweise 1,6 bis 3,5, besonders bevorzugt 1,7 bis 2,8 und das zahlenmittlere Molekulargewicht 500 bis 10000 g/mol, vorzugsweise 1000 bis 9000 g/mol und insbesondere 1500 bis 8000 g/mol. Vorzugsweise enthält das Polyol (a-2) mindestens 50 Gew.-%, besonders bevorzugt mindestens 60 Gew.-% und insbesondere 70 Gew.-% Polypropylenoxid, jeweils bezogen auf das Gesamtgewicht des Polyols (a-2).

Die Herstellung der Polyole (a-2) erfolgt zumeist durch die allgemein bekannte basisch katalysierte Anlagerung von Propylenoxid allein oder im Gemisch mit Ethylenoxid an H-funktionelle, insbesondere OH-funktionelle Startsubstanzen, oder mittels DMC-Katalyse. Als Startsubstanzen dienen beispielsweise Wasser, Ethylenglykol oder Propylenglykol beziehungsweise Glycerin oder Trimethylolpropan.

Als Kettenverlängerungsmittel (a-3) für das Prepolymer sind zwei- oder dreiwertige Alkohole, bevorzugt verzweigte zwei- oder dreiwertige Alkohole mit einem Molekulargewicht von weniger als 450 g/mol, besonders bevorzugt weniger als 400 g/mol, insbesondere weniger als 300 g/mol geeignet. Der Anteil des Kettenverlängerungsmittels am Gesamtgewicht der Polyisocyanatprepolymere (a) beträgt vorzugsweise 0,1 bis 10 Gew.-%, besonders bevorzugt 0,5 bis 8 Gew.-% und insbesondere 1 bis 6 Gew.-%. Bevorzugt enthalten Kettenverlängerer (a-3) Tripropylenglykol. Besonders bevorzugt werden als Kettenverlängerer (a-3) Dipropylenglykol und/oder Tripropylenglykol sowie Addukte von Dipropylenglykol und/oder Tripropylenglykol mit Alkylenoxiden, bevorzugt Propylenoxid, oder Mischungen daraus eingesetzt. Insbesondere wird als Kettenverlängerungsmittel (a-3) ausschließlich Tripropylenglykol eingesetzt.

Als Polyetherpolyole (b) werden Polyetherole enthaltend Propylenoxid und Ethylenoxid mit einem Ethylenoxid-Gehalt von 0,5 bis 60 Gew.-% und einem Gehalt an primären OH-Gruppen von 1 bis 45 % eingesetzt. Diese werden durch Anlagerung von Propylenoxid und Ethylenoxid an Propylenglykol oder Polypropylenglykol erhalten.

Bei den Polyetherpolyolen (b) handelt es sich um niedrig ungesättigte Polyole mit einem Gehalt an ungesättigten Verbindungen von < 0,02 meq/g, bevorzugt < 0,01 meg/g. Ihre Hydroxylzahl liegt vorzugsweise im Bereich zwischen 6 und 180 mg KOH/g.

Die Polyetheralkohole werden durch Anlagerung von Ethylenoxid und Propylenoxid an Alkylenglykole oder Polyalkylenglykole, bevorzugt Propylenglykol oder Polypropylenglykol in Gegenwart von Multimetallcyanid-Katalysatoren, auch als DMC-Katalysatoren bezeichnet, hergestellt. Die DMC-Katalysatoren werden zumeist durch Umsetzung eines Metallsalzes mit einer Cyanometallatverbindung hergestellt. Diese Umsetzung kann in Anwesenheit von organischen Liganden durchgeführt werden. Ein häufig eingesetzter DMC-Katalysator ist Zinkhexacyanocobaltat. Der DMC-Katalysator kann nach der Umsetzung im Polyetheralkohol belassen werden, üblicherweise wird er entfernt, beispielsweise durch Sedimentation oder Filtration.

Grundsätzlich sind alle aus dem Stand der Technik bekannten DMC-Katalysatoren geeignet. Geeignete DMC-Katalysatoren sind beispielsweise in WO 97/29146, WO 99/16775, DE-A 101 17 273, WO 00/74845, WO 01/64772, WO 2006/117364 und WO 2007/82596 beschrieben.

Als Startsubstanz werden Alkylenglykole oder Polyalkylenglykole, vorzugsweise Propylenglykol oder Polypropylenglykol (i), besonders bevorzugt (Poly)propylenglykol mit einem zahlenmittleren Molekulargewicht von 46 bis 8000 g/mol, bevorzugt 76 bis 4000 g/mol, eingesetzt. Die Startersubstanz wird mit Mischungen (iii) aus 1,2-Propylenoxid und Ethylenoxid oder zunächst mit reinem 1,2-Propylenoxid (ii) und anschließend mit Mischungen (iii) aus 1,2-Propylenoxid und Ethylenoxid umgesetzt. In diesen Mischungen aus 1,2-Propylenoxid und Ethylenoxid beträgt der Propylenoxid-Gehalt von 30 bis 95 mol-% und entsprechend der Ethylenoxid-Gehalt von 5 bis 70 mol-%. Vorzugsweise beträgt der Propylenoxid-Gehalt von 35 bis 50 mol-%, beispielsweise 45 mol-%, und entsprechend der Ethylenoxid-Gehalt von 50 bis 65 mol-%, beispielsweise 55 mol-%. Vorzugsweise wird das Verhältnis Propylenoxid: Ethylenoxid in der Mischung (iii) während der Umsetzung konstant gehalten. Insgesamt werden solche Mengen Propylenglykol (i), gegebenenfalls reines 1,2-Propylenoxid (ii) und Propylenoxid/Ethylenoxid-Gemisch (iii) umgesetzt, dass insgesamt ein Ethylenoxid-Gehalt des Polyetherpolyols (b) von 0.5 bis 60 Gew.-%, vorzugsweise 5 bis 50 Gew.-% und insbesondere 15 bis 30 Gew.-% Ethylenoxid resultiert. Dabei beträgt der Anteil des sogenannten Heteric-Blocks, also der Anteil des Gemischs (iii) bezogen auf die Summe der Komponenten (i), gegebenenfalls (ii) und (iii) im Allgemeinen 5 bis 80 Gew.-%, vorzugsweise 10 bis 80 Gew.-% und insbesondere 20 bis 50 Gew.-%. Die entstehenden Polyole weisen 1 bis 45 %, vorzugsweise 10 bis 40 %, beispielsweise 30 % primäre OH-Endgruppen auf.

Die erhaltenen Polyetherpolyole (b) besitzen eine Funktionalität von 2. Die zahlenmittleren Molekulargewichte der Polyetherpolyole (b) betragen vorzugsweise 1000 bis 16000, besonders bevorzugt 1300 bis 12000 und insbesondere 1600 bis 10000 g/mol.

Die Polymerpolyetherpolyole (c) werden auf Basis der Polyetherpolyole (b) erhalten und weisen im Allgemeinen einen Gehalt an - bevorzugt thermoplastischen - Polymeren von 5 bis 60 Gew.-%, bevorzugt 10 bis 55 Gew.-%, besonders bevorzugt 30 bis 55 Gew.-% und insbesondere 40 bis 50 Gew.-%, auf. Diese Polymerpolyetherpolyole werden, ausgehend von Polyetherpolyolen (b), durch radikalische Polymerisation von olefinisch ungesättigten Monomeren, vorzugsweise Acrylniltril, Styrol, sowie gegebenenfalls weiterer Monomere, eines Makromers und gegebenenfalls eines Moderators unter Einsatz eines Radikal-Initiators, meist Azo-oder Peroxidverbindungen, in dem Polyetherol als kontinuierlicher Phase hergestellt. Das Polyetherol (b), das die kontinuierliche Phase darstellt, wird auch als Trägerpolyol bezeichnet. Die Herstellung von Polymerpolyolen ist grundsätzlich in US 4,568,705, US 5,830,944, EP 0 163 188, EP 0 365 986, EP 0 439 755, EP 0 664 306, EP 0 622 384, EP 0 894 812 und WO 00/59971 beschrieben.

Bevorzugt werden Acrylnitril, Styrol oder besonders bevorzugt Mischungen aus Styrol und Acrylnitril, z.B. im Gewichtsverhältnis von 90:10 bis 10:90, vorzugsweise von 70:30 bis 30:70, in situ polymerisiert. Ein weiteres bevorzugtes Polymerpolyol enthält als Monomer ausschließlich Acrylnitril.

Als Trägerpolyole werden die unter (b) beschrieben Polyetherpolyole eingesetzt. Makromere, auch als Stabilisatoren bezeichnet, sind lineare oder verzweigte Polyetherole mit Molekulargewichten größer oder gleich 1000 g/mol, die mindestens eine endständige, reaktionsfähige olefinische ungesättigte Gruppe enthalten. Die ethylenisch ungesättigte Gruppe kann über Reaktion mit Carbonsäureanhydriden, wie Maleinsäureanhydrid, Fumarsäure, Acrylat- und Methacrylat-Derivaten sowie Isocyanat-Derivaten, wie 3-Isopropenyl-1,1-dimethylbenzylisocyanat und Isocyanatethylmethacrylat, an ein bereits bestehendes Polyol angefügt werden. Ein weiterer Weg ist die Herstellung eines Polyols durch Polymerisation von Propylenoxid und Ethylenoxid unter Verwendung von Startmolekülen mit Hydroxylgruppen und einer ethylenischen Ungesättigtheit. Beispiele für solche Makromere sind in den Dokumenten US 4,390,645, US 5,364,906, EP 0 461 800, US 4,997,857, US 5,358,984, US 5,990,232, WO 01/04178 und US 6,013,731 beschrieben.

Während der radikalischen Polymerisation werden die Makromere mit in die Copolymerkette eingebaut. Dadurch bilden sich Blockcopolymere mit einem Polyether- und einem Polyacrylnitril-Styrol-Block, welche in der Grenzfläche von kontinuierlicher Phase und dispergierter Phase als Phasenvermittler wirken und das Agglomerieren der Polymerpolyolpartikel unterdrücken. Der Anteil der Makromere beträgt üblicherweise 1 bis 15 Gew.-% , bevorzugt 3 bis 10 Gew.-%, bezogen auf das Gesamtgewicht der zur Herstellung des Polymerpolyols eingesetzten Monomere.

Zur Herstellung von Polymerpolyolen werden üblicherweise Moderatoren, auch als Kettenüberträger bezeichnet, eingesetzt. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Polymerpolyole beeinflusst. Der Anteil der Moderatoren beträgt üblicherweise 0,5 bis 25 Gew.-%, bezogen auf das Gesamtgewicht der zur Herstellung des Polymerpolyols eingesetzten Monomere. Moderatoren, die üblicherweise zur Herstellung von Polymerpolyolen eingesetzt werden, sind Alkohole, wie 1-Butanol, 2-Butanol, Isopropanol, Ethanol, Methanol, Cyclohexan, Toluol, Mercaptane, wie Ethanthiol, 1-Heptanthiol, 2-Octanethiol, 1-Dodecanthiol, Thiophenol, 2-Ethylhexylthioglykolate, Methylthioglykolate, Cyclohexylmercaptan sowie Enoletherverbindungen, Morpholine u n d alpha-(Benzoyloxy)styren. Bevorzugt wird Alkylmercaptan verwendet.

Zur Initiierung der radikalischen Polymerisation werden üblicherweise Peroxid- oder Azo-Verbindungen, wie Dibenzoylperoxide, Lauroylperoxide, t-Amylperoxy-2-ethylhexanoate, Di-t-butylperoxide, Diisopropylperoxidcarbonate, t-Butylperoxy-2-ethylhexanoate, t-Butylperpivalate, t-Butylperneodecanoate, t-Butylperbenzoate, t-Butyl percrotonate, t-Butylperisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4dimethylvaleronitrile), 2,2'-Azobisisobutyronitrile (AIBN), Dimethyl-2,2'-azobisisobutyrate, 2,2'-Azobis(2-methylbutyronitrile) (AMBN), 1,1'-Azobis(1-cyclohexanecarbonitrile), eingesetzt. Der Anteil der Initiatoren beträgt üblicherweise 0,1 bis 6 Gew.-%, bezogen auf das Gesamtgewicht der zur Herstellung des Polymerpolyols eingesetzten Monomere.

Die radikalische Polymerisation zur Herstellung von Polymerpolyolen wird aufgrund der Reaktionsgeschwindigkeit der Monomere sowie der Halbwertzeit der Initiatoren üblicherweise bei Temperaturen von 70 bis 150°C und einem Druck bis zu 20 bar durchgeführt. Bevorzugte Reaktionsbedingungen zur Herstellung von Polymerpolyolen sind Temperaturen von 80 bis 140°C bei einem Druck von Atmosphärendruck bis 15 bar.

Polymerpolyole werden in kontinuierlichen Verfahren unter Einsatz von Rührkesseln mit kontinuierlichem Zu- und Ablauf, Rührkesselkaskaden, Rohrreaktoren und Loopreaktoren mit kontinuierlichem Zu- und Ablauf, oder in diskontinuierlichen Verfahren mittels eines Batch-Reaktors oder eines Semi-Batch Reaktors, hergestellt.

Die erfindungsgemäßen Polyurethanformkörper enthalten Polyetherole (b), Polymerpolyole (c) oder Polyetherpolyole (b) und Polymerpolyole (c). Werden Polymerpolyole (c) mit umgesetzt, so ist deren Anteil vorzugsweise > 5 Gew.-%, bezogen auf das Gesamtgewicht der Komponenten (b) und (c). Die Polymerpolyetherpolyole (c) können, bezogen auf das Gesamtgewicht der Komponenten (b) und (c), beispielsweise in einer Menge von 7 bis 100 Gew.-%, oder von 20 bis 100 Gew.-% enthalten sein. In einer bevorzugten Ausführungsform beträgt der Anteil an Polymerpolyolen 80 bis 100 Gew.-%, insbesondere 100 Gew.-%, bezogen auf die Komponenten (b) und (c).

Als Kettenverlängerungsmittel und/oder Vernetzungsmittel (d) werden Substanzen mit einem Molekulargewicht von kleiner 700 g/mol, bevorzugt von 60 bis 400 g/mol eingesetzt, wobei Kettenverlängerer zwei gegenüber Isocyanaten reaktive Wasserstoffatome und Vernetzungsmittel drei gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten < 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie 1,3-Propandiol, 1,10-Decandiol, 1,2-, 1,3-, 1,4-Dihydroxycyclohexan, Diethylenglykol, Dipropylenglykol und vorzugsweise Monoethylenglykol, 1,4-Butandiol, 1,6-Hexandiol und Bis(2-hydroxyethyl)hydrochinon, Triole, wie 1,2,4-, 1,3,5-Trihydroxycyclohexan, Glycerin, Diethanolamin, Triethanolamin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle.

Besonders bevorzugt werden als Kettenverlängerer (d) Monoethylenglykol oder 1,4-Butandiol, insbesondere Mischungen eingesetzt. Dabei beträgt der Anteil von Monoethylenglykol oder 1,4-Butandiol in einer weiteren bevorzugten Ausführungsform 50 - 99,5 Gew.-%, bezogen auf das Gesamtgewicht von Kettenverlängerungsmittel und/oder Vernetzungsmittel (d), besonders bevorzugt 55 - 95 Gew.-%, ganz besonders bevorzugt 60 - 90 Gew.-% und insbesondere 70 - 85 Gew.-%. Insbesondere wird eine Mischung aus 20 Gew.-% Monoethylenglykol und 80 Gew.-% 1,4-Butandiol eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) (c) und (d), zum Einsatz.

In einer weiteren bevorzugten Ausführungsform, in der als wesentliche Polyol-Komponente ein Polymerpolyol verwendet wird, beträgt der Gew.-Anteil von Kettenverlängerer und/oder kurzkettigen Vernetzern oder Triolen (Mw < 1100 g/mol) am Polyol 0.2 - 15 Gew.-%, bevorzugt 1 - 10 Gew.-%, besonders bevorzugt 2 - 8 Gew.-% und insbesondere 4 - 6 Gew.-%.

Als Katalysatoren (e) zur Herstellung der Polyurethanschaumstoffe werden bevorzugt Verbindungen verwendet, welche die Reaktion der reaktive H-Atome enthaltenden Verbindungen der Komponente (b) und (c) mit den Polyisocyanatprepolymeren (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethyl-hexandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn(II)-salze von organischen Carbonsäuren, z.B. Zinn(II)-acetat, Zinn(II)-octoat, Zinn(II)-ethylhexoat und Zinn(II)-laurat und die Dialkylzinn(IV)-salze von organischen Carbonsäuren, z.B. Dibutylzinndiacetat, Dibutylzinndilaurat, Dibutylzinnmaleat und Dioctylzinndiacetat, sowie Bismutcarboxylate, wie Bismut(III)-neodecanoat, Bismut-2-ethylhexanoat und Bismutoctanoat oder Mischungen davon. Die organischen Metallverbindungen können allein oder vorzugsweise in Kombination mit stark basischen Aminen eingesetzt werden. Insbesondere werden zinnfreie Katalysatorsysteme eingesetzt, wie Katalysatorsysteme enthaltend organische Metallverbindungen auf Basis von Bismut in Kombination mit stark basischen Aminen. Solche zinnfreien Katalysatorsysteme sind beispielsweise in EP 1 720 927 beschrieben.

Vorzugsweise verwendet werden 0,001 bis 5 Gew.-%, insbesondere 0,05 bis 2 Gew.-% Katalysator bzw. Katalysatorkombination, bezogen auf das Gewicht der Komponenten (b), (c) und (d).

Ferner sind bei der Herstellung von Polyurethan-Weichintegralschaumstoffen Treibmittel (f) zugegen. Diese Treibmittel enthalten Wasser. Als Treibmittel (f) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird Wasser als alleiniges Treibmittel eingesetzt.

Der Gehalt an Wasser beträgt in einer bevorzugten Ausführungsform von 0,1 bis 2 Gew.-%, bevorzugt 0,2 bis 1,8 Gew.-%, besonders bevorzugt 0,3 bis 1,5 Gew.-%, insbesondere 0,4 bis 1,2 Gew.-%, bezogen auf das Gesamtgewicht der Komponenten (b) bis (f).

In einer weiteren bevorzugten Ausführungsform werden der Umsetzung der Komponenten (a) bis (f) und gegebenenfalls (g) als zusätzliches Treibmittel Mikrohohlkugeln, die physikalisches Treibmittel enthalten, zugegeben. Die Mikrohohlkugeln können auch im Gemisch mit den vorstehend genannten zusätzlichen chemischen Treibmitteln und/oder physikalischen Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3,615,972 beschrieben. Die Mikrohohlkugeln weisen im Allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im Allgemeinen in einer Menge von 0,5 bis 5 Gew.-%, bezogen auf das Gesamtgewicht der Komponenten (b) bis (f), zugesetzt.

Der Reaktionsmischung zur Herstellung der Polyurethanschäume können gegebenenfalls auch noch Hilfsmittel und/oder Zusatzstoffe (g) zugegeben werden. Genannt seien beispielsweise oberflächenaktive Substanzen, Schaumstabilisatoren, Zellregler, Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z. B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Rizinusölsulfaten oder von Fettsäuren, sowie Salze von Fettsäuren mit Aminen, z.B. ölsaures Diethylamin, stearinsaures Diethanolamin, rizinolsaures Diethanolamin, Salze von Sulfonsäuren, z.B. Alkali- oder Ammoniumsalze von Dodecylbenzol- oder Dinaphthylmethandisulfonsäure, und Rizinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Rizinusöl- bzw. Rizinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaums eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponenten (b) bis (d), eingesetzt.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 0 153 639 offenbart, Gemische aus organischen Aminen, Metallsalzen der Stearinsäure und organischen Mono- und/oder Dicarbonsäuren oder deren Anhydride, wie beispielsweise in DE-A 3 607 447 offenbart, oder Gemische aus einer Iminoverbindung, dem Metallsalz einer Carbonsäure und gegebenenfalls einer Carbonsäure, wie beispielsweise in US 4,764,537 offenbart.

Als Füllstoffe, insbesondere verstärkend wirkende Füllstoffe, sind die an sich bekannten üblichen organischen und anorganischen Füllstoffe, Verstärkungsmittel, Beschwerungsmittel, Beschichtungsmittel usw. zu verstehen. Im Einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (b) bis (d), zugegeben, wobei jedoch der Gehalt an Matten, Vliesen und Geweben aus natürlichen und synthetischen Fasern Werte bis 80 Gew.-% erreichen kann.

Die Komponenten (a) bis (g) werden zur Herstellung eines erfindungsgemäßen Polyurethanschaumes in solchen Mengen miteinander vermischt, dass das Äquivalenzverhältnis von NCO-Gruppen der Polyisocyanatprepolymere (a) zur Summe der reaktiven Wasserstoffatome der Komponenten (b), (c), (d) und (f) 1 : 0,8 bis 1 : 1,25, vorzugsweise 1 : 0,9 bis 1 : 1,15 beträgt. Mischungen der Komponenten (a) bis (f) und gegebenenfalls (g) bei Reaktionsumsätzen von kleiner 90 %, bezogen auf die Isocyanatgruppen, werden als Reaktionsmischung bezeichnet.

Die erfindungsgemäßen Polyurethan-Integralschaumstoffe werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7.

Die Ausgangskomponenten (a) bis (f) und gegebenenfalls (g) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Vorzugsweise wird dabei im 2-Komponentenverfahren gearbeitet. Dazu wird im Vorfeld eine Polyolkomponente, umfassend die Komponenten (b) bis (f) und gegebenenfalls (g), hergestellt, welche die A-Komponente bildet. Diese wird dann bei der Herstellung der Reaktionsmischung mit der Isocyanat-Komponente, der sogenannten B-Komponente, enthaltend die Isocyanatprepolymere (a), vermischt. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Die Menge der in das Formwerkzeug eingebrachten Reaktionsmischung wird so bemessen, dass die erhaltenen Polyurethan-Formkörper eine Dichte von 20 bis 1200 g/L, insbesondere bei Integralschaumstoffen von 150 bis 800 g/L aufweisen. Die Verdichtungsgrade zur Herstellung der Polyurethan-Integralschaumstoffe liegen dabei vorzugsweise im Bereich von 1,1 bis 8,5, besonders bevorzugt im Bereich von 1,8 bis 7,0.

Beispielsweise zeichnen sich die erfindungsgemäßen Integralschaumstoffe durch sehr gute mechanische Eigenschaften wie eine hohe Reißdehnung aus. Weiter lassen sich die erfindungsgemäßen Polyurethan-Weichintegralschaumstoffe problemlos herstellen und zeigen eine hervorragende Dimensionsstabilität und keine Oberflächendefekte, wie Hautablöser oder Lunker. Erfindungsgemäße Polyurethanformkörper weisen insbesondere eine gute Weiterreißfestigkeit und gute Dauerbiegeeigenschaften auf.

Im Folgenden wird die Erfindung anhand von Beispielen verdeutlicht.

### Beispiele

### Ausgangsmaterialien:

- Polyol 1:: Glycerin-gestartetes Polyetherpolyol mit einer OH Zahl von 27 und > 60% primären OH-Gruppen (Zusammensetzung 80 Gew.-% Propylenoxid, 20 Gew.-% Ethylenoxid)
- Polyol 2:: Propylenglykol-gestartetes Polyetherpolyol mit einer OH-Zahl von 29 und > 60% primären OH-Gruppen (Zusammensetzung 85% Propylenoxid, 15 % Ethylenoxid)
- Polyol 3:: Polymerpolyetherol (Styrol/Acrylnitril-Partikel) auf Basis von Polyol 1 mit einer OH-Zahl von 20 und einem Feststoffgehalt von 45 Gew.-%
- Polyol 4:: Propylenglykol-gestartetes Polyetherpolyol mit einer OH-Zahl von 19 (Zusammensetzung 75 Gew.-% Propylenoxid, 25 Gew.-% Ethylenoxid) und 30% primären OH-Gruppen
- Polyol 5:: Propylenglykol-gestartetes Polyetherpolyol mit einer OH-Zahl von 57 (Zusammensetzung 75% Gew.-Propylenoxid, 25 Gew.-% Ethylenoxid) und 30% primären OH-Gruppen
- Polyol 6:: Polymerpolyetherol (Styrol/Acrylnitril-Partikel) auf Basis von Polyol 5 mit einer OH-Zahl von 32 und einem Feststoffgehalt von 42 Gew.-%

| | |
|---|---|
| Kettenverlängerungsmittel 1: | 1,4-Butandiol |
| Kettenverlängerungsmittel 2: | Monoethylenglykol |
| Vernetzer: | ethoxyliertes Glycerin (OH-Zahl 270) |
| Katalysator 1: | Triethylendiamin |
| Katalysator 2: | Bis-(2-dimethylaminoethyl)ether (Niax A1) |
| Katalysator 3: | Fomrez UL28 |
| Schaumstabilisator: | DC 193^{®} der Firma Dow Corning, silikonbasiert |
| Treibmittel: | Wasser |

Isocyanat: Prepolymer aus 50 Gew.-Teile 4,4' Diisocyanatodiphenylmethan (Rein-MDI), 2 Gew.-Teilen uretoniminmodifiziertes Rein-MDI, 46 Gew.-Teilen eines linearen Propylenglykol-gestarteten Polyoxypropylenetherols (OHZ 55 mg KOH/mg), 2 Gew.-Teilen Tripropylenglykol

Die verwendete Polyolkomponente A (Vergleich) besteht aus 44,78 Gew.-Teilen Polyol 1, 30 Gew.-Teilen Polyol 2, 10 Gew.-Teilen Polyol 3, 10,5 Gew.-Teilen Kettenverlängerungsmittel 1, 1,5 Gew.-Teilen Kettenverlängerungsmittel 2, 2 Gew.-Teilen Katalysator 1, 0,3 Gew.-Teilen Katalysator 2, 0,04 Gew.-Teilen Katalysator 3, 0,3 Gew.-Teilen Schaumstabilisator und 0,58 Gew.-Teilen Treibmittel.

Die verwendete Polyolkomponente B (erfindungsgemäß) besteht aus 74,78 Gew.-Teilen Polyol 4, 10 Gew.-Teilen Polyol 3, 10,5 Gew.-Teilen Kettenverlängerungsmittel 1, 1,5 Gew.-Teilen Kettenverlängerungsmittel 2, 2 Gew.-Teilen Katalysator 1, 0,3 Gew.-Teilen Katalysator 2, 0,04 Gew.-Teilen Katalysator 3, 0,3 Gew.-Teilen Schaumstabilisator und 0,58 Gew.-Teilen Treibmittel.

Die verwendete Polyolkomponente C (erfindungsgemäß) besteht aus 93,3 Gew.-Teilen Polyol 6, 2,4 Gew.-Teilen Kettenverlängerungsmittel 2, 2,5 Gew.-Teilen Vernetzer, 0,8 Gew.-Teilen Katalysator 1, 0,24 Gew.-Teilen Katalysator 2, 0,1 Gew.-Teilen Katalysator 3, 0,36 Gew.-Teilen Schaumstabilisator und 0,3 Gew.-Teilen Treibmittel.

### Beispiele 1 und 2

### Herstellung der Polyole 4 und 5 (erfindungsgemäß):

In einem 250 L Reaktor wurden 48,1 kg (Polyol 4) bzw. 57,95 kg (Polyol 5) eines Polypropylenglykols mit einer Molmasse von 1000 g/mol (Polyol 4) bzw. 500 g/mol (Polyol 5) vorgelegt. Hierzu wurden 720 g einer 5%-igen Doppelmetallcyanid-Suspension gegeben. Die Mischung wurde im Vakuum unter Zufuhr von Stickstoff erwärmt, um Spuren von Wasser zu entfernen. Nach der Dosierung von wenig Propylenoxid und dem Anspringen der Reaktion wurde zunächst Propylenoxid, dann ein Gemisch aus Propylenoxid und Ethylenoxid im Massenverhältnis von 45:55 bis zum Endprodukt mit einer Molmasse von 5900 g/mol (Polyol 4) bzw. 1900 g/mol (Polyol 5) hinzugegeben, so dass insgesamt 25 Gew.-% Ethylenoxid, bezogen auf die Masse von Polyol 4 bzw. 5, umgesetzt wurden.

### Analyse der erfindungsgemäßen Produkte:

Die Polyole wurden per Gelpermeationschromatographie mit einem Refraktometer als Detektor analysiert. Als mobile Phase wurde Tetrahydrofuran (THF) oder Dimethylacetamid (DMAc) verwendet, als Standard zur Bestimmung des Molekulargewichts wurde Polymethylmethacrylat (PMMA) eingesetzt.

Die Bestimmung der Säurezahl und der OH-Zahl (über Veresterungszahl) erfolgte nach DIN 53240, Teil 2.

### Ergebnise:

Polyol 4: OHZ 19 mgKOH/g, SZ 0,007 mgKOH/g

Polyol 5: OHZ 57 mgKOH/g, SZ 0,005 mgKOH/g

### Beispiele 3 und 4

### Herstellung der Polymerpolyetherole 3 (Vergleich) und 6 (erfindungsgemäß)

Die Herstellung der Polymerpolyetherole (Polyole 3 und 6) erfolgte in einem 200 L-Reaktor. Vor Beginn der Reaktion wurde der Reaktor mit < 50 Gew.-% der Menge an Trägerpolyol gefüllt, mit Stickstoff gespült und auf die Synthesetemperatur von 125°C erwärmt. Das Makromer wurde während der Synthese hinzudosiert. Der restliche Teil der Reaktionsmischung, bestehend aus weiterem Trägerpolyol, Initiator und den Monomeren, wurde in zwei Dosierbehältern entsprechend der endgültigen Feststoffmenge vorgelegt. Die Synthese der Polymerpolyole erfolgte durch Überführen der Rohstoffe mit konstanter Dosiergeschwindigkeit über einen statischen In-line-Mischer in den Reaktor. Die Dosierdauer für das Monomer-Moderator-Gemisch betrug 150 Minuten, während das Polyol-Initiator-Gemisch über 165 Minuten in den Reaktor dosiert wurde. Nach weiteren 10 Minuten Nachreaktionszeit bei 125°C wurde das Produkt bei einer Temperatur von 135°C unter Vakuum (< 0,1 mbar) von den nicht umgesetzten Monomeren und anderen flüchtigen Verbindungen befreit. Das Endprodukt wurde mit Antioxidantien stabilisiert. Die Synthese von Mengen von mehr als 5 kg erfolgte im Druckreaktor mit zweistufigem Rührwerk und Kühlschlangen. Zum Entmonomerisieren wurde das Produkt in einen anderen Behälter überführt.

### Beispiele 5 bis 7

### Es wurden Reaktionsmischungen 1 bis 3 wie nachstehend beschrieben umgesetzt.

### Reaktionsmischung 1 (Vergleich):

100 Gew.-Teile der Polyolkomponente A (45 °C) und 113 Gew.-Teile von Isocyanat (40 °C) wurden mittels Niederdruckgießmaschine (F20) miteinander vermischt und diese Mischung in eine auf 35 °C temperierte Aluminiumform (200 x 200 x 10 mm) gegeben, die Form geschlossen und der so hergestellte Polyurethanintegralschaum nach 3,5 Minuten entformt.

### Reaktionsmischung 2 (erfindungsgemäß):

100 Gew.-Teile der Polyolkomponente B (45 °C) und 110 Gew.-Teile des Isocyanats (40 °C) wurden mittels Niederdruckgießmaschine (F20) miteinander vermischt und diese Mischung in eine auf 35 °C temperierte Aluminiumform (200 x 200 x 10 mm) gegeben, die Form geschlossen und der so hergestellte Polyurethanintegralschaum nach 4 Minuten entformt.

### Reaktionsmischung 3 (erfindungsgemäß):

100 Gew.-Teile der Polyolkomponente C (45 °C) und 53 Gew.-Teile des Isocyanats (40 °C) wurden mittels Niederdruckgießmaschine (F20) miteinander vermischt und diese Mischung in eine auf 35 °C temperierte Aluminiumform (200 x 200 x 10 mm) gegeben, die Form geschlossen und der so hergestellte Polyurethanintegralschaum nach 4 Minuten entformt.

Die mechanischen Eigenschaften der hergestellten Probe wurden nach 24 Stunden Lagerung gemäß den DIN EN ISO 1798, 3386, 53573 und ISO 34-1 bestimmt und sind in Tabelle 1 aufgelistet.

**Tabelle 1**

| | Reaktionsmischung 1 (Vergleich) | Reaktionsmischung 2 (erfindungsgemäß) | Reaktionsmischung 3 (erfindungsgemäß) |
|---|---|---|---|
| Raumgewicht (g/L) | 550 | 550 | 700 |
| Knickzeit (min) | 3:00 | 4:00 | 4:00 |
| Härte (Shore A) | 45 | 41 | 50 |
| Zugfestigkeit (N/mm²) | 5,1 | 5,4 | 6,2 |
| Bruchdehnung (%) | 386 | 449 | 261 |
| Weiterreißfestigkeit (N/mm) | 4,4 | 5,9 | 4,7 |
| Rückprallelastizität (%) | 37 | 37 | 35 |
| Dauerbiegeeigenschaft: Risslängenwachstum nach 100000 Zyklen (mm) | Gebrochen nach 45000 Zyklen | 3,4 | 1,0 |

Tabelle 1 zeigt, dass die aus den erfindungsgemäßen Reaktionsmischungen 2 und 3 erhaltenen Proben deutlich bessere Dauerbiegeeigenschaften (3,4 mm bzw. 1,0 mm) Risslängenwachstum nach 100.000 Zyklen und Weiterreißfestigkeiten (5,9 N/mm bzw. 4,7 N/mm) im Vergleich zu der aus Reaktionsmischung 1 erhaltenen Probe aufweisen. Somit lassen sich die erfindungsgemäßen Materialien aufgrund ihres Eigenschaftsprofils für Anwendungen einsetzen, in denen sowohl geschäumte Materialien als auch kompakte Elastomere Verwendung finden, wie beispielsweise Schuhsohlen, Dämpfungselemente, Lenkräder, Rollen und Armlehnen.

## Patentansprüche

1. Verfahren zur Herstellung eines Polyurethan-Formkörpers, bei dem man
(a) Polyisocyanate (a-1) oder Polyisocyanatprepolymere, erhältlich aus einer Polyisocyanatkomponente (a-1), Polyol (a-2) enthaltend Alkylenoxid, und Kettenverlängerer (a-3), und Polyole (b) oder (c), bestehend aus
(b) Polyetherpolyolen, erhältlich durch Anlagerung von Propylenoxid und Ethylenoxid an Alkylenglykole oder Polyalkylenglykole, mit einem Ethylenoxid-Gehalt von 0,5 bis 60 Gew.-% und einem Gehalt an primären OH-Gruppen von 1 bis 45 %, oder
(c) Polymerpolyetherpolyolen auf Basis von Polyetherpolyolen, erhältlich durch Anlagerung von Propylenoxid und Ethylenoxid an Alkylenglykole oder Polyalkylenglykole, mit eine Ethylenoxid-Gehalt von 0,5 bis 60 Gew.-% und einem Gehalt an primären OH-Gruppen von 1 bis 45 %, wobei mindestens eine der Komponenten (b) oder (c) oder beide Komponenten (b) und (c) enthalten sind; und
(d) Kettenverlängerer,
(e) Katalysatoren,
(f) Treibmittel, enthaltend Wasser, und gegebenenfalls
(g) sonstigen Hilfsmittel und/oder Zusatzstoffe
zu einer Reaktionsmischung vermischt und in einer Form zum Polyurethanformkörper aushärtet

2. Verfahren nach Anspruch 1, **dadurch gekennzeichnet**, das die Polyetherpolyole (b) durch Umsetzung von (i) Alkylenglykol oder Polyalkylenglykol mit einem zahlenmittleren Molekulargewicht von 46 bis 8000 g/mol, mit zuerst (ii) reinem 1,2-Propylenoxid und anschließend (iii) einem Gemisch aus 1,2-Propylenoxid und Ethylenoxid, erhältlich sind.

3. Verfahren nach Anspruch 1, **dadurch gekennzeichnet**, das die Polyetherpolyole durch Umsetzung von (i) Propylenglykol oder Polypropylenglykol mit einem zahlenmittleren Molekulargewicht von 76 bis 4000 g/mol und (iii) einem Gemisch aus 1,2-Propylenoxid und Ethylenoxid erhältlich sind.

4. Verfahren nach Anspruch 2 oder 3, **dadurch gekennzeichnet, dass** das Gemisch (iii) 30 bis 95 Gew.-% 1,2-Propylenoxid und 5 bis 70 Gew.-% Ethylenoxid enthält.

5. Verfahren nach Anspruch 4, **dadurch gekennzeichnet, dass** 5 bis 80 Gew.-% des Gemischs (iii), bezogen auf das fertige Polyetherpolyol (b), umgesetzt werden.

6. Verfahren zur Herstellung eines Polyurethanformkörpers nach einem der Ansprüche 1 bis 5, **dadurch gekennzeichnet, dass** das Polyisocyanatprepolymer (a) einen NCO-Gehalt von 8 bis 28 % aufweist.

7. Verfahren zur Herstellung eines Polyurethanformkörpers nach einem der Ansprüche 1 bis 6, **dadurch gekennzeichnet, dass** als Polyol (a-2) ausschließlich Polypropylenoxid eingesetzt wird.

8. Verfahren zur Herstellung eines Polyurethanformkörpers nach einem der Ansprüche 1 bis 7, **dadurch gekennzeichnet, dass** der Kettenverlängerer (a-3) Tripropylenglykol enthält

9. Verfahren zur Herstellung eines Polyurethanformkörpers nach einem der Ansprüche 1 bis 8, **dadurch gekennzeichnet, dass** als Kettenverlängerer (d) 1,4-Butandiol und/oder Monoethylenglykol eingesetzt werden.

10. Verfahren zur Herstellung eines Polyurethanformkörpers nach Anspruch 6, **dadurch gekennzeichnet, dass** als Kettenverlängerer (d) eine Mischung aus 1,4-Butandiol und Monoethylenglykol eingesetzt wird.

11. Polyurethanformkörper, erhältlich nach einem Verfahren gemäß einem der Ansprüche 1 bis 10.

12. Schuhsohle enthaltend einen Polyurethan-Formkörper, der erhältlich ist, indem man
(a) Polyisocyanate (a-1) oder Polyisocyanatprepolymere, erhältlich aus einer Polylsocyanatkomponente (a-1), Polyol (a-2) enthaltend Alkylenoxid, und Kettenverlängerer (a-3), und Polyole (b) oder (c), bestehend aus
(b) Polyetherpolyolen enthaltend Propylenoxid und Ethylenoxid mit einem Ethylenoxid-Gehalt von 0,5 bis 60 Gew.-% und einem Gehalt an primären OH-Gruppen von 1 bis 45 %, oder
(c) Polymerpolyetherpolyolen auf Basis von Polyetherpolyolen enthaltend Propylenoxid und Ethylenoxid mit eine Ethylenoxid-Gehalt von 0,5 bis 60 Gew.-% und einem Gehalt an primären OH-Gruppen von 1 bis 45 %, wobei mindestens eine der Komponenten (b) oder (c) oder beide Komponenten (b) und (c) enthalten sind; und
(d) Kettenverlängerer,
(e) Katalysatoren,
(f) Treibmittel, enthaltend Wasser, und gegebenenfalls
(g) sonstigen Hilfsmittel und/oder Zusatzstoffe
zu einer Reaktionsmischung vermischt und in einer Form zum Polyurethanformkörper aushärtet.

13. Schuhsohle nach Anspruch 12, **dadurch gekennzeichnet**, das die Polyetherpolyole (b) durch Umsetzung von (i) Alkylenglykol oder Polyalkylenglykol mit einem zahlenmittleren Molekulargewicht von 46 bis 8000 g/mol, mit zuerst (ii) reinem 1,2-Propylenoxid und anschließend (iii) einem Gemisch aus 1,2-Propylenoxid und Ethylenoxid, erhältlich sind.

14. Schuhsohle nach Anspruch 12, **dadurch gekennzeichnet**, das die Polyetherpolyole durch Umsetzung von (i) Propylenglykol oder Polypropylenglykol mit einem zahlenmittleren Molekulargewicht von 76 bis 4000 g/mol und (iii) einem Gemisch aus 1,2-Propylenoxid und Ethylenoxid erhältlich sind.

15. Schuhsohle nach Anspruch 13 oder 14, **dadurch gekennzeichnet, dass** das Gemisch (iii) 30 bis 95 Gew.-% 1,2-Propylenoxid und 5 bis 70 Gew.-% Ethylenoxid enthält.

## Claims

1. A process for producing a polyurethane molding, wherein
(a) polyisocyanates (a-1) or polyisocyanate prepolymers obtainable from a polyisocyanate component (a-1), polyol (a-2) comprising alkylene oxide and chain extender (a-3), and polyols (b) or (c) consisting of
(b) polyether polyols obtainable by addition of propylene oxide and ethylene oxide onto alkylene glycols or polyalkylene glycols and having an ethylene oxide content of from 0.5 to 60% by weight and a content of primary OH groups of from 1 to 45% or
(c) polymer polyether polyols based on polyether polyols obtainable by addition of propylene oxide and ethylene oxide onto alkylene glycols or polyalkylene glycols and having an ethylene oxide content of from 0.5 to 60% by weight and a content of primary OH groups of from 1 to 45%, where at least one of the components (b) or (c) or both components (b) and (c) are comprised; and
(d) chain extenders,
(e) catalysts,
(f) blowing agents comprising water and, optionally
(g) other auxiliaries and/or additives
are mixed to form a reaction mixture and cured in a mold to give the polyurethane molding.

2. The process according to claim 1, wherein the polyether polyols (b) can be obtained by reacting (i) alkylene glycol or polyalkylene glycol having a number average molecular weight of from 46 to 8000 g/mol with firstly (ii) pure 1,2-propylene oxide and subsequently (iii) a mixture of 1,2-propylene oxide and ethylene oxide.

3. The process according to claim 1, wherein the polyether polyols can be obtained by reacting (i) propylene glycol or polypropylene glycol having a number average molecular weight of from 76 to 4000 g/mol with (iii) a mixture of 1,2-propylene oxide and ethylene oxide.

4. The process according to claim 2 or 3, wherein the mixture (iii) comprises from 30 to 95% by weight of 1,2-propylene oxide and from 5 to 70% by weight of ethylene oxide.

5. The process according to claim 4, wherein from 5 to 80% by weight of the mixture (iii), based on the finished polyether polyol (b), are reacted.

6. The process for producing a polyurethane molding according to any of claims 1 to 5, wherein the polyisocyanate prepolymer (a) has an NCO content of from 8 to 28%.

7. The process for producing a polyurethane molding according to any of claims 1 to 6, wherein exclusively polypropylene oxide is used as polyol (a-2).

8. The process for producing a polyurethane molding according to any of claims 1 to 7, wherein the chain extender (a-3) comprises tripropylene glycol.

9. The process for producing a polyurethane molding according to any of claims 1 to 8, wherein 1,4-butanediol and/or monoethylene glycol are used as chain extender (d).

10. The process for producing a polyurethane molding according to claim 6, wherein a mixture of 1,4-butanediol and monoethylene glycol is used as chain extender (d).

11. A polyurethane molding which can be obtained by a process according to any of claims 1 to 10.

12. A shoe sole comprising a polyurethane molding which can be obtained in that
(a) polyisocyanates (a-1) or polyisocyanate prepolymers obtainable from a polyisocyanate component (a-1), polyol (a-2) comprising alkylene oxide and chain extender (a-3), and polyols (b) or (c) consisting of
(b) polyether polyols comprising propylene oxide and ethylene oxide and having an ethylene oxide content of from 0.5 to 60% by weight and a content of primary OH groups of from 1 to 45% or
(c) polymer polyether polyols based on polyether polyols comprising propylene oxide and ethylene oxide and having an ethylene oxide content of from 0.5 to 60% by weight and a content of primary OH groups of from 1 to 45%, where at least one of the components (b) or (c) or both components (b) and (c) are comprised; and
(d) chain extenders,
(e) catalysts,
(f) blowing agents comprising water and, optionally
(g) other auxiliaries and/or additives
are mixed to form a reaction mixture and cured in a mold to give the polyurethane molding.

13. The shoe sole according to claim 12, wherein the polyether polyols (b) can be obtained by reacting (i) alkylene glycol or polyalkylene glycol having a number average molecular weight of from 46 to 8000 g/mol with firstly (ii) pure 1,2-propylene oxide and subsequently (iii) a mixture of 1,2-propylene oxide and ethylene oxide.

14. The shoe sole according to claim 12, wherein the polyether polyols can be obtained by reacting (i) propylene glycol or polypropylene glycol having a number average molecular weight of from 76 to 4000 g/mol with (iii) a mixture of 1,2-propylene oxide and ethylene oxide.

15. The shoe sole according to claim 13 or 14, wherein the mixture (iii) comprises from 30 to 95% by weight of 1,2-propylene oxide and from 5 to 70% by weight of ethylene oxide.

## Revendications

1. Procédé de fabrication d'un corps moulé en polyuréthane, selon lequel
(a) des polyisocyanates (a-1) ou des prépolymères de polyisocyanate, pouvant être obtenus à partir d'un composant polyisocyanate (a-1), d'un polyol (a-2) contenant de l'oxyde d'alkylène et d'un allongeur de chaîne (a-3), et des polyols (b) ou (c), constitués par
(b) des polyéther-polyols, pouvant être obtenus par addition d'oxyde de propylène et d'oxyde d'éthylène sur des alkylène glycols ou des polyalkylène glycols, ayant une teneur en oxyde d'éthylène de 0,5 à 60 % en poids et une teneur en groupes OH primaires de 1 à 45 %, ou
(c) des polyéther-polyols polymères à base de polyéther-polyols, pouvant être obtenus par addition d'oxyde de propylène et d'oxyde d'éthylène sur des alkylène glycols ou des polyalkylène glycols, ayant une teneur en oxyde d'éthylène de 0,5 à 60 % en poids et une teneur en groupes OH primaires de 1 à 45 %,
au moins un des composants (b) ou (c) ou les deux composants (b) et (c) étant contenus ; et
(d) des allongeurs de chaîne,
(e) des catalyseurs,
(f) des agents gonflants contenant de l'eau, et éventuellement
(g) d'autres adjuvants et/ou additifs sont mélangés en un mélange réactionnel et durcis dans un moule en le corps moulé en polyuréthane.

2. Procédé selon la revendication 1, **caractérisé en ce que** les polyéther-polyols (b) peuvent être obtenus par mise en réaction de (i) un alkylène glycol ou un polyalkylène glycol ayant un poids moléculaire moyen en nombre de 46 à 8 000 g/mol, avec tout d'abord (ii) de l'oxyde de 1,2-propylène pur, puis (iii) un mélange d'oxyde de 1,2-propylène et d'oxyde d'éthylène.

3. Procédé selon la revendication 1, **caractérisé en ce que** les polyéther-polyols peuvent être obtenus par mise en réaction de (i) du propylène glycol ou du polypropylène glycol ayant un poids moléculaire moyen en nombre de 76 à 4 000 g/mol et (iii) un mélange d'oxyde de 1,2-propylène et d'oxyde d'éthylène.

4. Procédé selon la revendication 2 ou 3, **caractérisé en ce que** le mélange (iii) contient 30 à 95 % en poids d'oxyde de 1,2-propylène et 5 à 70 % en poids d'oxyde d'éthylène.

5. Procédé selon la revendication 4, **caractérisé en ce que** 5 à 80 % en poids du mélange (iii), par rapport au polyéther-polyol (b) fini, sont mis en réaction.

6. Procédé de fabrication d'un corps moulé en polyuréthane selon l'une quelconque des revendications 1 à 5, **caractérisé en ce que** le prépolymère de polyisocyanate (a) présente une teneur en NCO de 8 à 28 %.

7. Procédé de fabrication d'un corps moulé en polyuréthane selon l'une quelconque des revendications 1 à 6, **caractérisé en ce qu'**exclusivement de l'oxyde de polypropylène est utilisé en tant que polyol (a-2).

8. Procédé de fabrication d'un corps moulé en polyuréthane selon l'une quelconque des revendications 1 à 7, **caractérisé en ce que** l'allongeur de chaîne (a-3) contient du tripropylène glycol.

9. Procédé de fabrication d'un corps moulé en polyuréthane selon l'une quelconque des revendications 1 à 8, **caractérisé en ce que** du 1,4-butanediol et/ou du monoéthylène glycol sont utilisés en tant qu'allongeur de chaîne (d).

10. Procédé de fabrication d'un corps moulé en polyuréthane selon la revendication 6, **caractérisé en ce qu'**un mélange de 1,4-butanediol et de monoéthylène glycol est utilisé en tant qu'allongeur de chaîne (d).

11. Corps moulé en polyuréthane, pouvant être obtenu par un procédé selon l'une quelconque des revendications 1 à 10.

12. Semelle de chaussure contenant un corps moulé en polyuréthane, pouvant être obtenu par un procédé selon lequel
(a) des polyisocyanates (a-1) ou des prépolymères de polyisocyanate, pouvant être obtenus à partir d'un composant polyisocyanate (a-1), d'un polyol (a-2) contenant de l'oxyde d'alkylène et d'un allongeur de chaîne (a-3), et des polyols (b) ou (c), constitués par
(b) des polyéther-polyols contenant de l'oxyde de propylène et de l'oxyde d'éthylène, ayant une teneur en oxyde d'éthylène de 0,5 à 60 % en poids et une teneur en groupes OH primaires de 1 à 45 %, ou
(c) des polyéther-polyols polymères à base de polyéther-polyols contenant de l'oxyde de propylène et de l'oxyde d'éthylène, ayant une teneur en oxyde d'éthylène de 0,5 à 60 % en poids et une teneur en groupes OH primaires de 1 à 45 %,
au moins un des composants (b) ou (c) ou les deux composants (b) et (c) étant contenus ; et
(d) des allongeurs de chaîne,
(e) des catalyseurs,
(f) des agents gonflants contenant de l'eau, et éventuellement
(g) d'autres adjuvants et/ou additifs
sont mélangés en un mélange réactionnel et durcis dans un moule en le corps moulé en polyuréthane.

13. Semelle de chaussure selon la revendication 12, **caractérisée en ce que** les polyéther-polyols (b) peuvent être obtenus par mise en réaction de (i) un alkylène glycol ou un polyalkylène glycol ayant un poids moléculaire moyen en nombre de 46 à 8 000 g/mol, avec tout d'abord (ii) de l'oxyde de 1,2-propylène pur, puis (iii) un mélange d'oxyde de 1,2-propylène et d'oxyde d'éthylène.

14. Semelle de chaussure selon la revendication 12, **caractérisée en ce que** les polyéther-polyols peuvent être obtenus par mise en réaction de (i) du propylène glycol ou du polypropylène glycol ayant un poids moléculaire moyen en nombre de 76 à 4 000 g/mol et (iii) un mélange d'oxyde de 1,2-propylène et d'oxyde d'éthylène.

15. Semelle de chaussure selon la revendication 13 ou 14, **caractérisée en ce que** le mélange (iii) contient 30 à 95 % en poids d'oxyde de 1,2-propylène et 5 à 70 % en poids d'oxyde d'éthylène.
